# EUROPÄISCHE PATENTSCHRIFT

(11) **EP 1 878 370 B1**
(45) Veröffentlichungstag und Bekanntmachung des Hinweises auf die Patenterteilung: **12.09.2012**
(21) Anmeldenummer: 06014753.5
(22) Anmeldetag: 14.07.2006
(51) Int. Cl.: A47J 31/60, A47J 31/44

(54) **Reinigungseinrichtung**
Cleaning Device
Dispositif de nettoyage

(43) Veröffentlichungstag der Anmeldung: 16.01.2008
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE)
(74) Vertreter: Grünecker, Kinkeldey, Stockmair & Schwanhäusser

(56) Entgegenhaltungen:
- WO-A1-2005/112717
- US-A- 3 132 656

## Beschreibung

Die Erfindung bezieht sich auf eine Vorrichtung zum Zuführen von Milch und eine damit ausgerüstete Kaffeemaschine.

Die US 3 132 656-A zeigt ein Reinigungssystem für eine Leitung, die speziell für eine Bierleitung beschrieben ist, jedoch auch für die Verwendung mit Getränkeausgabesystemen allgemein beschrieben wird. Eine Reinigung milchhaltiger Teile ist jedoch nicht beschrieben. Die Reinigungseinrichtung enthält einen Spülraum, der den zu reinigenden Teil der Zufuhrleitung aufnimmt. In die untere Stirnseite des Spülraums mündet eine Leitung zum Einleiten einer Reinigungssubstanz oder eines Spülmittels. Der innere Durchmesser des Spülraums ist größer als der Außendurchmesser des eingesetzten Teils der Zufuhrleitung, so dass zumindest teilweise auch eine Außenreinigung der Zufuhrleitung stattfinden kann. Die zu reinigende Zufuhrleitung wird jedoch von oben in den Spülraum und koaxial der Einmündung der Reinigungsleitung gegenüberliegend eingesetzt. Dabei ist damit zu rechnen, dass zwischen der Außenseite der Zufuhrleitung und der Innenseite des Spülraums ein Luftpolster eingeschlossen wird, sobald der Flüssigkeitsspiegel einer Reinigungsflüssigkeit die Öffnung der Zufuhrleitung verschließt. Dies dürfte die Außenreinigung entscheidend verschlechtern. Auch eine Entlüftung des Spülraums im Bereich der oberen Stirnseite dürfte dieses Problem nicht lösen, da dann die Gefahr besteht, dass das Spülmittel aus dem Spülraum herausspritzt.

Die WO 2005/112717 zeigt eine Milchaufschäumeinrichtung, deren mit Milch und Luftsauerstoff in Kontakt kommenden Teile nicht gereinigt, sondern einfach weggeworfen werden.

Eine aus der EP 344 859 bekannte Vorrichtung dient zum Ausgeben erwärmter Milch und enthält weiterhin eine Aufschäumvorrichtung, mit der die Milch zusätzlich aufgeschäumt werden kann. Aufschäumvorrichtungen für Milch sind in den unterschiedlichsten Wirkprinzipien bekannt; bei der beschriebenen Vorrichtung wird Milch, beispielsweise unter Ausnutzung des Venturi-Prinzips, aus einem Vorratsbehälter angesaugt. Dies geschieht über eine Zufuhrleitung in Form eines Schlauchs, dessen Auslassende mit der Aufschäumeinrichtung verbunden wird und dessen Einlassende einfach in einen Vorratsbehälter für Milch eingesteckt wird. Ein Problem bei allen Vorrichtungen, die Milch handhaben, ist die Reinigung. Milch verdirbt schnell und demzufolge sollten die mit Milch in Berührung kommenden Teile möglichst oft und möglichst gründlich gereinigt und entkeimt werden. Dies ist innerhalb der Erhitzungs- und Aufschäumeinrichtung weniger ein Problem, da dort mit Dampf gearbeitet wird, so dass die Aufschäumeinrichtung durch einen reinen Dampfstoß, ohne Milcheinleitung, relativ problemlos gereinigt werden kann, wobei zumindest bis zur nächsten gründlichen Reinigung unter Demontage der Teile und/oder Einsatz von Reinigungsmitteln ein Bakterienwachstum sicher verhindert wird. Da es jedoch keinen natürlichen Weg für den Dampf in die Zufuhrleitung gibt, kann die Zufuhrleitung auf diese Weise nicht oder zumindest nicht ausreichend gereinigt werden. Bei der bekannten Vorrichtung wird deshalb vorgeschlagen, den Zufuhrschlauch zwischenzeitlich mit seinem Einlassende in eine Reinigungsflüssigkeit zu bringen und durch eine Betätigung der Vorrichtung statt Milch nunmehr die Reinigungsflüssigkeit durch die Zufuhrleitung anzusaugen. Dies ist jedoch umständlich und führt unter Umständen nicht zum gewünschten Ergebnis. Für eine gründliche Reinigung der Zufuhrleitung könnte auch heißes Wasser kurz vor dem Kochen verwendet werden, was jedoch problematisch zu handhaben ist und auch nicht immer zur Verfügung steht. Kaltes oder lediglich warmes Wasser führt nicht zum gewünschten Reinigungsergebnis. Werden Reinigungsmittel verwendet, so muss anschließend aufwendig gespült werden, um sicherzustellen, dass alle Rückstände aus der Vorrichtung entfernt werden.

Darüber hinaus muss der Vorratsbehälter, um eine vollständige Reinigung der Außenseite des Zufuhrschlauches zu gewährleisten, zumindest bis zum Höchststand der Milch im Vorratsbehälter auch mit Reinigungsmittel befüllt werden, was beim Fassungsvermögen der Milchvorratsbehälter moderner Kaffeemaschinen einer Verschwendung von Reinigungsmittel gleich kommt.

Der Erfindung liegt somit die Aufgabe zugrunde, eine Vorrichtung der genannten Art so weiterzubilden, dass die Reinigung erleichtert wird.

Die Aufgabe wird bei einer Vorrichtung durch die Merkmale des Anspruches 1, und bei einer Kaffeemaschine durch die Merkmale des Anspruches 8 gelöst.

Die erfindungsgemäße Ausgestaltung erlaubt auf einfache und zweckmäßige Weise eine Außenreinigung der Zufuhrleitung. Durch die Anordnung eines gesonderten Spülraums kann dieser speziell an die Form und Abmessung des zu reinigenden Teils der Außenseite der Zufuhrleitung angepasst werden, so dass einerseits eine gründliche Reinigung stattfinden kann, andererseits jedoch kein Reinigungsmittel verschwendet wird. Mit der erfindungsgemäßen Reinigungseinrichtung ist es weiterhin auf einfache Weise möglich, eine Reinigung auch mit Heißwasser oder sogar mit Dampf durchzuführen, die in hygienischer Hinsicht ein wesentlich besseres Reinigungsergebnis erbringen als die Reinigung mit einfachem Spülmittel.

Die erfindungsgemäße Vorrichtung kann für als getrennte Einheiten ausgebildete Milchausgabevorrichtungen, für Getränkeautomaten oder, mit besonderem Vorteil, für Kaffeemaschinen eingesetzt werden. Ist in diesen Geräten, ein Heißwasser- und/oder Dampf- und/oder Reinigungsmittel- und/oder Kaltwasser-Vorrat vorhanden, so kann dieser auch für die erfindungsgemäße Vorrichtung verwendet werden und mit der Einlassöffnung in den Spülraum verbunden werden.

Für eine Reinigung, z. B. bei einem Wechsel des Milchvorrats, muss der Benutzer lediglich die Zufuhrleitung vom Milchvorratsbehälter lösen, mit dem verschmutzten Abschnitt in den Spülraum einbringen und einen Spülvorgang auslösen.

Vorteilhafte Weiterbildungen der Erfindung sind den Unteransprüchen zu entnehmen.

Bevorzugt ist die Anschlussöffnung in den Spülraum mit einer Dichtung versehen, um ein Austreten des Reinigungsmediums, insbesondere von Dampf, mit der damit verbundenen Gefährdung des Benutzers zu vermeiden.

Eine besonders gute Reinigungswirkung wird erreicht, wenn der Spülraum so ausgebildet ist, dass der zu reinigende Teil der Zuführleitung axial ausgestreckt aufgenommen werden kann.

Der Spülraum sollte groß genug und die Einlassöffnung so angeordnet sein, dass sich um den aufgenommenen Teil der Zufuhrleitung ein Flutungsraum bildet, in dem das Reinigungsmedium strömen kann.

Die erfindungsgemäße Vorrichtung ist besonders geeignet für eine Zwischenreinigung zwischen den turnusmäßigen Generalreinigungen der Maschine, meist am Ende des Tages oder der Arbeitswoche, oder bei größerer Temperaturbelastung der eingesetzten Milch auch öfter, so dass bevorzugt ein Betätigungselement zum Einleiten eines Reinigungsvorganges vorgesehen ist, so dass bei Bedarf ein Reinigungsvorgang vom Benutzer eingeleitet werden kann.

Wenn dafür gesorgt wird, dass das Innere des Spülraums auch mit dem Inneren der Zufuhrleitung in Verbindung steht, kann gleichzeitig mit der Außenseite auch die Innenseite der Zufuhrleitung gereinigt werden. Darüber hinaus wird dadurch eine besonders einfache Möglichkeit geschaffen, das Reinigungsmedium aus dem Spülraum zu entfernen und über die Ausgabeeinrichtung abzuleiten. Es sollte durch spezielle Einsteckmarkierungen und/oder Anschläge sichergestellt werden, dass das aufgenommene Teil der Zufuhrleitung sich nicht über die volle Länge des Spülraums erstreckt, so dass das Innere der Zufuhrleitung auf einfache Weise mit dem Spülraum in Verbindung bleibt.

Sind die Aufnahmeöffnung und die Einlassöffnung in der Nähe des tiefsten Punktes des Spülraums angeordnet, so wird sichergestellt, dass der gesamte aufgenommene Teil der

Zufuhrleitung von frischem Reinigungsmedium umspült wird. Gleichzeitig erleichtert diese Anordnung auch das Austreiben von restlichem Reinigungsmedium nach dem Reinigen und bevor die Zuführleitung wieder aus dem Spülraum entfernt wird.

Ein Ausführungsbeispiel der Erfindung wird nachfolgend anhand der Zeichnungen näher erläutert. Es zeigen:
- Fig. 1: eine stark schematisierte Darstellung einer Kaffeemaschine mit einer erfindungsgemäßen Vorrichtung, und
- Fig. 2: die erfindungsgemäße Vorrichtung in stark schematisierter Darstellung.

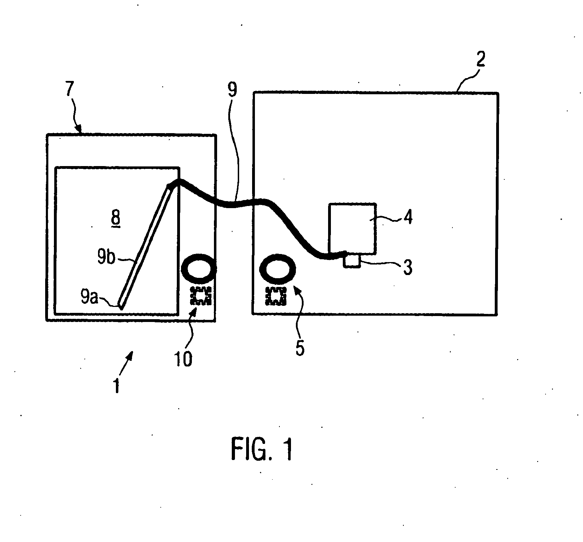

In Fig. 1 ist eine Kaffeemaschine 1 ersichtlich, von der hier nur beispielhaft ein Gehäuse 2, ein Auslass 3, dem eine Milch-Aufschäumeinrichtung 4 vorgeordnet ist sowie ein Bedienfeld 5, das mit einer Steuerung 6 verbunden ist, gezeigt ist. Die Kaffeemaschine 1 enthält im dargestellten Ausführungsbeispiel einen zugeordneten Milchvorrat 7, der hier als Kühleinrichtung ausgebildet ist, in dem ein Vorratsbehälter 8 für Milch gekühlt untergebracht ist. Im dargestellten Ausführungsbeispiel ist der Milchvorrat 7 als getrenntes Bauteil außerhalb des Gehäuses 2 der Kaffeemaschine 1 ausgebildet. Der Vorratsbehälter 8 kann jedoch in üblicher Weise auch in das Gehäuse 2 integriert oder an das Gehäuse 2 angebaut werden.

Der Vorratsbehälter 8 steht mit dem Auslass 3 über eine Zufuhrleitung 9 entweder direkt oder über die Aufschäumeinrichtung 4 in Verbindung. Die Zufuhrleitung 9 ist in geeigneter Weise lösbar am Vorratsbehälter 8 so befestigt, dass der Vorratsbehälter 8 über die Zufuhrleitung 9 geleert werden kann. Die Zufuhrleitung 9 ist bevorzugt, zumindest über einen vorbestimmten Teil ihrer Länge, als (flexibler) Schlauch ausgebildet, und taucht mit einer Einfassöffnung 9a in die Milch im Vorratsbehälter 8 ein. Der in die Milch eintauchende Teil der Zufuhrleitung 9 ist bevorzugt als starres Röhrchen 9b, d.h. als sogenannte Milchlanze, ausgebildet, an der der schlauchartige Teil der Zufuhrleitung außerhalb des Vorratsbehälters 8 bzw. außerhalb des Milchspiegels befestigt ist. Milchlanzen sind etwas schwerer als Schläuche, so dass weniger die Gefahr besteht, dass sich der Ansaugpunkt vom Boden des Vorratsbehälters 8 nach oben verschiebt. Die Erfindung ist jedoch auch für Zufuhrleitungen 9 einsetzbar, die auch im Inneren des Vorratsbehälters 8 als Schlauch ausgebildet sind.

Im dargestellten Ausführungsbeispiel enthält der Milchvorrat 7 eigene Betätigungsmittel 10, die sich beispielsweise auf die Funktionen des Milchvorrats 7 beziehen.

Die Kaffeemaschine 1 enthält weiterhin Vorräte an Heißwasser und/oder Dampf und/oder Reinigungsmittel und/oder Kaltwasser; und kann auch einen nicht gezeichneten Vorrat an Druckluft aufweisen. Der Begriff "Vorrat" soll sich sowohl auf entsprechende Vorratsbehälter als auch auf eine laufende Zuführung über eine Zufuhrleitung als auch auf entsprechende Bereiter beziehen, und beispielsweise Heißwasser- und Dampfbereiter, Heißwasserboiler, Kaltwasseranschlüsse an das Leitungsnetz, Reinigungsmittelvorräte oder - erzeuger (beispielsweise Lösungsbehälter zum Auflösen fester oder zum Verdünnen flüssiger chemischer Reinigungsmittel in Wasser oder Ozonerzeuger oder dgl.) enthalten. Derartige Vorräte sind in Kaffeemaschinen für den Gastronomiebereich üblicherweise vorhanden.

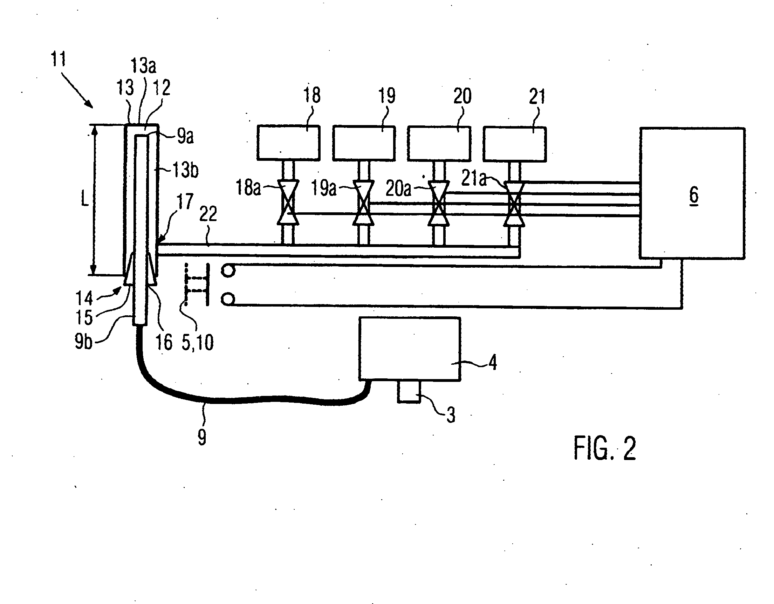

Die Kaffeemaschine 1 enthält weiterhin die in Fig. 2 näher dargestellte Reinigungseinrichtung 11. Die Reinigungseinrichtung 11 enthält einen Spülraum 12, der in einem Gehäuse 13 untergebracht ist. Das Gehäuse 13 ist im dargestellten Ausführungsbeispiel zylindrisch rohrförmig ausgebildet. Das Gehäuse 13 ist ringsum druckdicht geschlossen und weist eine Anschlussöffnung 14 auf, die die Wandung 13 durchbricht. Die Anschlussöffnung 14 ist bevorzugt in der Nähe des tiefsten Punktes des Spülraums 12 angeordnet und erstreckt sich bevorzugt über die gesamte untere Stirnfläche des Gehäuses 13. In die Anschlussöffnung 14 ist eine Dichtung 15 eingepasst, die von einer Aufnahmebohrung 16 für die Zufuhrleitung 9 durchsetzt ist. Die Dichtung 15 ist so ausgebildet, dass zwischen der Wandung 13 und der Dichtung 15 sowie der Zufuhrleitung 9 und der Dichtung 15 kein Strömungsmittel hindurchtreten kann. Die Anschlussöffnung 14 ist bevorzugt für einen Stecksitz der Zufuhrleitung 9 ausgebildet, d. h. die Zufuhrleitung 9 kann in die Anschlussöffnung 14 eingesteckt werden und hält dort durch Reibung.

Der Spülraum 12 weist eine axiale Länge L auf, die mindestens derjenigen Länge entspricht, mit der die Zufuhrleitung 9 in den höchsten Milchstand im Vorratsbehälter 8 eintaucht, so dass der zu reinigende Teil der Zufuhrleitung 9, d. h. die Einlassöffnung 9a am freien Ende der Zufuhrleitung 9 und der sich anschließende Teil, axial ausgestreckt aufgenommen werden kann. Dabei befindet sich die Einlassöffnung 9a in einem Abstand zur der Anschlussöffnung 14 gegenüberliegenden Stirnseite 13a des Gehäuses 13. Im dargestellten Ausführungsbeispiel ist die Milchlanze 9b länger als der höchste Milchstand, und ragt demzufolge aus dem Spülraum 12 mit ihrem oberen Ende heraus.

Die korrekte Position der Zufuhrleitung 9 im Spülraum 12 kann durch Anschläge, beispielsweise durch eine Permanentbefestigung der Dichtung 15 an der Zufuhrleitung 9, oder durch Einsteckmarkierungen oder dgl. festgelegt werden.

In den Spülraum 12 mündet weiterhin eine Einlassöffnung 17. Die Einlassöffnung 17 ist mit wenigstens einem Vorrat für ein Reinigungsmedium verbunden. Als Reinigungsmedien können verwendet werden Kaltwasser und/oder Heißwasser und/oder Dampf und/oder Reinigungsmittel (fest, flüssig oder gasförmig) oder dgl., wie sie sowieso in der Kaffeemaschinen einzeln vorgesehen oder als gesonderter Vorrat ausgebildet sind. Außerdem kann hier der Druckluftvorrat angeschlossen bzw. anschließbar sein. Im dargestellten Ausführungsbeispiel steht die Einlassöffnung 17 mit einem Dampfvorrat 18, einem Kaltwasservorrat 19, einem Heißwasservorrat 20 und einem Reinigungsmittelvorrat 21 in Verbindung. Jeder dieser Vorräte 18 bis 21 ist über ein entsprechendes absperrbares Ventil 18a, 19a, 20a, 21 a mit einer Sammelleitung 22 verbunden, die in die Einlassöffnung 17 einmündet. Die Ventile 18a bis 21 a werden durch eine eigene Steuerung oder die Steuerung 6 der Kaffeemaschine 1 beaufschlagt. Die Erfindung ist jedoch auch dann einsetzbar, wenn nicht alle der beschriebenen Reinigungsmedien vorhanden oder mit der Einlassöffnung 17 verbunden sind.

Die Einlassöffnung 17 erstreckt sich durch die Seitenwand 13b des Gehäuses 13. Die Einlassöffnung 17 mündet bevorzugt ebenfalls in der Nähe des tiefsten Punktes des Spülraumes 12 und bevorzugt rechtwinklig zur Aufnahmeöffnung 14 und rechtwinklig zur in der Aufnahmeöffnung 14 aufgenommenen Zufuhrleitung 9.

Das Gehäuse 13 hat einen Innendurchmesser, der größer ist als der Außendurchmesser des im Spülraum 12 aufgenommenen Teils der Zufuhrleitung 9, wobei der Durchmesserunterschied so bemessen ist, dass sich zwischen dem aufgenommenen Teil der Zufuhrleitung 9 und der Innenwandung des Gehäuses 12 ein Flutungsraum ausbildet, der einerseits dafür sorgt, dass alle Bereiche der zu reinigenden Außenseite der Zufuhrleitung 9 erreicht werden und andererseits auch für eine mechanische Reinigungswirkung sorgt. Der Spülraum 12 sollte einerseits groß genug für einen ausreichenden Reinigungsmitteldurchsatz und andererseits klein genug für eine ausreichende Strömungsgeschwindigkeit sein. Auch kann durch eine geeignete Anordnung der Einlassöffnung 17 erreicht werden, dass die Strömung weitgehend turbulent den gesamten Flutungsraum erfasst (z. B. zyklonartige Ausgestaltung o. dgl.).

Wird beispielsweise beim Neubefüllen oder Wechseln des Vorratsbehälters 8 eine Zwischenreinigung erwünscht oder notwendig, so nimmt der Benutzer die Zufuhrleitung 9 aus dem Vorratsbehälter 8 und steckt diese, mit der Einlassöffnung 9a nach oben, in die Anschlussöffnung 14 bis zur vorbestimmten Tiefe hinein. Dann wird über ein dafür vorgesehenes Betätigungsmittel, das sich innerhalb des Betätigungsfeldes 5 am Gehäuse 2 oder innerhalb des Betätigungsfeldes 10 am Milchvorrat 7 befinden kann, ein Zwischen-Reinigungsvorgang eingeleitet. Der Reinigungsvorgang kann mit nur einem der Reinigungsmedien allein oder mit zweckmäßigen Kombinationen, beispielsweise mit Heißwasser, gefolgt von einem Dampfstoß, mit Reinigungsmittel, gefolgt durch eine Spülung mit Kalt- oder Heißwasser und/oder einem Dampfstoß oder durch andere geeignete Kombinationen von Reinigungsmedien durchgeführt werden. Zweckmäßige Reinigungsvorgänge können in der Steuerung 6 gespeichert und nach Bedarf vom Benutzer abgerufen werden oder durch den Benutzer selbst zusammengestellt werden, je nach Grad der Verschmutzung und/oder je nach Feststellung, ob z. B. Milchreste an der Zufuhrleitung 9 angetrocknet sind oder dgl.

Wird von der Steuerung das oder die entsprechenden Ventile 18a bis 21a geöffnet, so strömt das entsprechende Reinigungsmedium unter Druck durch die Sammelleitung 22 in die Einlassöffnung 17, prallt von dort gegen die Außenseite des aufgenommenen Teils der Zufuhrleitung 9 und steigt im Spülraum 12 nach oben, wodurch die gesamte Außenseite der Zufuhrleitung 9, die in der Milch im Vorratsbehälter 8 gesteckt hat, vom Reinigungsmedium benetzt wird. Erreicht der Spiegel des Reinigungsmediums im Spülraum 12 die Einlassöffnung 9a, so fließt das Reinigungsmedium auch durch das Innere der Zufuhrleitung 9 und durch den Auslass 3 ab. Dabei wird das Innere der Zufuhrleitung 9 und die mit Milch in Berührung kommenden Bereiche der Aufschäumeinrichtung 4 sowie der Auslass 3 von Milchresten befreit und sterilisiert bzw. desinfiziert. An die Reinigung kann sich eine Spülung mit Kaltwasser anschließen, und zwar auch dann, wenn kein eine Spülung notwendig machendes Reinigungsmittel verwendet wird, um sicherzustellen, dass der Benutzer nicht mit Tropfen des Reinigungsmediums in Kontakt kommt, wenn er nach dem Reinigen die Zufuhrleitung 9 wieder aus dem Spülraum 12 herauszieht, um sie in einen neuen oder neu befüllten Vorratsbehälter 8 zu stecken. Eine Spülung mit Kaltwasser kann auch zu Beginn des Reinigungsvorgangs sinnvoll sein, um größere Milchreste zunächst auszutreiben und ein Ausflocken der Milchreste durch heißes Wasser oder Dampf durch Denaturierung der Milcheiweiße zu verhindern. Auch eine Spülung des Systems am Ende des Reinigungsvorgangs mit Dampf kann sinnvoll sein, um den Spülraum 12 und/oder die Zufuhrleitung 9 und/oder die Ausgabevorrichtung 3 zu entleeren. Zu diesem Zweck könnte auch unter Druck stehende Luft verwendet werden.

In Abwandlung des beschriebenen und gezeichneten Ausführungsbeispieles kann die erfindungsgemäße Vorrichtung auch in einem Getränkeautomaten eingebaut oder als eigenständige Vorrichtung zum Ausgeben und Aufschäumen von Milch ausgebildet sein. Die Bedienung kann sowohl über die Steuerung der Kaffeemaschine bzw. des Getränkeautomaten als auch über eine zusätzliche Steuerung erfolgen. Auch die Ausbildung des Spülraums kann abgewandelt werden; so kann der Spülraum beispielsweise mit einer eigenen Ableitung versehen sein, so dass das Reinigungsmedium nicht über den Auslass der Kaffeemaschine läuft.

## Patentansprüche

1. Vorrichtung zum Zuführen von Milch aus einem Vorratsbehälter (8) zu einer Ausgabeeinrichtung (3), mit:
einer Zufuhrleitung (9), deren Einlassende (9a) lösbar mit dem Vorratsbehälter (8) verbunden ist, und
mit einer Reinigungseinrichtung (11) für zumindest einen Teil der Außenseite der Zufuhrleitung (9),
wobei die Reinigungseinrichtung (11) einen Spülraum (12) zum Aufnehmen des zu reinigenden Teils der Zufuhrleitung (9) umfasst, der eine Heißwasser- und/oder Dampfund/ oder Reinigungsmittel- und/oder Kaltwasser- Einlassöffnung (17) und eine Anschlussöffnung (14) zum lösbaren Einbringen des zu reinigenden Teils enthält,
wobei der Spülraum (12) einen sich um den zu reinigenden Teil der aufgenommenen Zufuhrleitung (9) herumerstreckenden Flutungsraum aufweist, der sich zwischen dem aufgenommenen Teil der Zufuhrleitung (9) und der Innenwandung eines Gehäuses (13) ausbildet,
das eine Seitenwand (13b) und eine der Anschlussöffnung (14) gegenüberliegende Stirnseite umfasst;
dadurch gekennzeichnet, dass sich die Einlassöffnung (17) durch die Seitenwand (13b) des Gehäuses (13) erstreckt.

2. Vorrichtung nach Anspruch 1, **dadurch gekennzeichnet, dass** die Anschlussöffnung (14) mit einer Dichtung (15) versehen ist.

3. Vorrichtung nach Anspruch 1 oder 2, **dadurch gekennzeichnet, dass** der Spülraum (12) für eine axial ausgestreckte Aufnahme der Zufuhrleitung (9) ausgebildet ist.

4. Vorrichtung nach einem der Ansprüche 1 bis 3, **dadurch gekennzeichnet, dass** die Reinigungseinrichtung (11) mit einer Steuerung (6) verbunden ist, die ein benutzerbetatigbares Betätigungselement (5, 10) zum Einleiten eines Reinigungsvorgangs enthält.

5. Vorrichtung nach einem der Ansprüche 1 bis 4, **dadurch gekennzeichnet, dass** der Spülraum (12) mit dem inneren der Zufuhrleitung (9) in Verbindung steht.

6. Vorrichtung nach einem der Ansprüche 1 bis 5, **dadurch gekennzeichnet, dass** der Spülraum (12) eine Länge (L) aufweist, die die Länge des zu reinigenden Teils der

7. Vorrichtung nach einem der Ansprüche 1 bis 6, **dadurch gekennzeichnet, dass** die Aufnahmeöffnung (14) und die Einlassöffnung (17) in der Nähe des tiefsten Punktes des Spülraums (12) angeordnet sind, und sich der aufgenommene Teil der Zufuhrieitung (9) nach oben erstreckt

8. Kaffeemaschine mit einem Heißwasser- und/oder Dampf- und/oder Reinigungsmittel-und/oder Kaltwasser- Vorrat (18 bis 21) und einer Vorrichtung nach einem der Ansprüche 1 bis 7 wobei der Heißwasser- und/oder Dampf- und/oder Reinigungsmittel-und/oder Kaltwasser- Vorrat (18 bis 21) mit der Einlassöffnung (17) verbunden ist.

9. Kaffeemaschine nach Anspruch 8, **gekennzeichnet durch** eine Steuerung (6) mit einem benutzerbetätigbaren Betatfgungselement (5) zum Einleiten eines Reinigungsvorgangs.

## Claims

1. Device for supplying milk from a reservoir (8) to an output device (3), comprising:
a feed line (9) whose inlet end (9a) is detachably connected to the reservoir (8) and
comprising a cleaning device (11) for at least some of the outside of the feed line (9),
wherein the cleaning device (11) comprises a washing chamber (12) for receiving the part of the feed line (9) to be cleaned and which contains a hot water and/or steam and/or cleaning agent and/or cold water inlet opening (17) and a connection opening (14) for detachably introducing the part to be cleaned,
wherein the washing chamber (12) has a flooding chamber extending around the part of the received feed line (9) to be cleaned and which is formed between the received part of the feed line (9) and the inner wall of a housing (13) which comprises a side wall (13b) and an end face opposing the connection opening (14),
characterised in that the inlet opening (17) extends through the side wall (13b) of the housing (13).

2. Device according to claim 1, **characterised in that** the connection opening (14) is provided with a seal (15).

3. Device according to claim 1 or 2, **characterised in that** the washing chamber (12) is designed for axially stretched out receiving of the feed line (9).

4. Device according to any one of claims 1 to 3, **characterised in that** the cleaning device (11) is connected to a controller (6) which contains an actuating element (5, 10), which can be actuated by a user, for initiating a cleaning cycle.

5. Device according to any one of claims 1 to 4, **characterised in that** the washing chamber (12) is connected to the inside of the feed line (9).

6. Device according to any one of claims 1 to 5, **characterised in that** the washing chamber (12) has a length (L) which exceeds the length of the part of the outside of the feed line (9) to be cleaned.

7. Device according to any one of claims 1 to 6, **characterised in that** the receiving opening (14) and the inlet opening (17) are arranged in the vicinity of the lowest point of the washing chamber (12) and the received part of the feed line (9) extends upwards.

8. Coffee machine having a hot water and/or steam and/or cleaning agent and/or cold water reservoir (18 to 21) and a device according to any one of claims 1 to 7, wherein the hot water and/or steam and/or cleaning agent and/or cold water reservoir (18 to 21) is connected to the inlet opening (17).

9. Coffee machine according to claim 8, **characterised by** a controller (6) having an actuating element (5), which can be actuated by a user, for initiating a cleaning cycle.

## Revendications

1. Dispositif pour amener du lait dans un distributeur (3) à partir d'un réservoir (8), avec :
une conduite d'amenée (9) dont l'extrémité d'entrée (9a) est reliée de manière amovible au réservoir (8), et
un dispositif de nettoyage (11) pour une partie au moins du côté extérieur de la conduite d'amenée (9),
étant précisé que le dispositif de nettoyage (11) contient un espace de rinçage (12) qui est destiné à loger la partie à nettoyer de la conduite d'amenée (9) et qui contient une ouverture d'entrée d'eau chaude et/ou de vapeur et/ou de produit de nettoyage et/ou d'eau froide (17) et une ouverture de raccordement (14) pour la mise en place amovible de la partie à nettoyer,
et que l'espace de rinçage (12) présente un espace d'immersion qui s'étend autour de la partie à nettoyer de la conduite d'amenée (9) logée et qui se forme entre ladite partie logée de la conduite d'amenée (9) et la paroi intérieure d'un boîtier (13) qui comprend une paroi latérale (13b) et un côté frontal opposé à l'ouverture de raccordement (14) ;
caractérisé en ce que l'ouverture d'entrée (17) traverse la paroi latérale (13b) du boîtier (13).

2. Dispositif selon la revendication 1, **caractérisé en ce que** l'ouverture de raccordement (14) est pourvue d'un joint d'étanchéité (15).

3. Dispositif selon la revendication 1 ou 2, **caractérisé en ce que** l'espace de rinçage (12) est conçu pour un logement allongé axialement de la conduite d'amenée (9).

4. Dispositif selon l'une des revendications 1 à 3, **caractérisé en ce que** le dispositif de nettoyage (11) est relié à une commande (6) qui contient un élément d'actionnement (5, 10) apte à être actionné par l'utilisateur, pour démarrer une opération de nettoyage.

5. Dispositif selon l'une des revendications 1 à 4, **caractérisé en ce que** l'espace de rinçage (12) communique avec l'intérieur de la conduite d'amenée (9).

6. Dispositif selon l'une des revendications 1 à 5, **caractérisé en ce que** l'espace de rinçage (12) présente une longueur (L) qui dépasse la longueur de la partie à nettoyer du côté extérieur de la conduite d'amenée (9).

7. Dispositif selon l'une des revendications 1 à 6, **caractérisé en ce que** l'ouverture de logement (14) et l'ouverture d'entrée (17) sont disposées près du point le plus profond de l'espace de rinçage (12), et la partie logée de la conduite d'amenée (9) s'étend vers le haut.

8. Machine à café avec un réservoir d'eau chaude et/ou de vapeur et/ou de produit de nettoyage et/ou d'eau froide (18 à 21) et un dispositif selon l'une des revendications 1 à 7, étant précisé que le réservoir d'eau chaude et/ou de vapeur et/ou de produit de nettoyage et/ou d'eau froide (18 à 21) est relié à l'ouverture d'entrée (17).

9. Machine à café selon la revendication 8, **caractérisé par** une commande (6) avec un élément d'actionnement (5) apte à être actionné par l'utilisateur, pour démarrer une opération de nettoyage.
